# EUROPÄISCHE PATENTSCHRIFT

(11) **EP 1 084 327 B1**
(45) Veröffentlichungstag und Bekanntmachung des Hinweises auf die Patenterteilung: **05.11.2003**
(21) Anmeldenummer: 99936381.5
(22) Anmeldetag: 01.06.1999
(51) Int. Cl.: F01D 5/08, F01D 25/12

(54) **GASTURBINE SOWIE VERFAHREN ZUR KÜHLUNG EINER TURBINENSTUFE**
GAS TURBINE AND METHOD FOR COOLING A TURBINE STAGE
TURBINE A GAZ AINSI QUE PROCEDE POUR LE REFROIDISSEMENT D'UN ETAGE DE TURBINE

(30) Priorität: 03.06.1998 DE 19824766
(43) Veröffentlichungstag der Anmeldung: 21.03.2001
(73) Patentinhaber: SIEMENS AKTIENGESELLSCHAFT, 80333 München (DE)
(72) Erfinder: REICHERT, Arnd, D-47051 Duisburg (DE)
(86) Internationale Anmeldenummer: DE9901613
(87) Internationale Veröffentlichungsnummer: WO99063204

(56) Entgegenhaltungen:
- EP-A- 0 192 185
- EP-A- 0 768 448
- GB-A- 2 170 865
- US-A- 4 447 190
- US-A- 5 636 659

## Beschreibung

Die Erfindung bezieht sich auf eine Gasturbine und ein Verfahren zur Kühlung einer Turbinenstufe einer Gasturbine mittels Kühlluft.

Eine Gasturbinenanlage wird üblicherweise zur Erzeugung elektrischer Energie eingesetzt. Dabei wird der Energieinhalt eines Brennstoffs zur Erzeugung einer Rotationsbewegung einer Welle genutzt, die wiederum einen Generator oder eine Arbeitsmaschine antreibt. Beim Betrieb der Gasturbinenanlage wird üblicherweise Umgebungsluft angesaugt und in einem der Gasturbine zugeordneten Luftverdichter auf einen hohen Druck verdichtet. Der größte Anteil der verdichteten Luft gelangt in eine oder mehrere Brennkammern und wird dort mit dem Brennstoff, beispielsweise Gas, vermischt.

Das Gas-Luft-Gemisch wird verbrannt, wobei die heißen Verbrennungsgase bei ihrer arbeitsleistenden Entspannung die Welle antreiben. Die Gasturbine umfaßt dazu eine Anzahl von Turbinenschaufeln. Diese sind in mehreren Turbinenstufen in feststehenden Leitschaufeln und in sich mit dem Rotor drehenden Laufschaufeln angeordnet. Über die in der Gasturbine erzeugte Drehbewegung der Welle wird üblicherweise zusätzlich zu dem Generator auch der Luftverdichter der Gasturbinenanlage angetrieben.

Zur Steigerung der Leistungsfähigkeit der Gasturbine und damit zur Erzielung eines möglichst hohen Wirkungsgrades der Gasturbinenanlage wird eine besonders hohe Temperatur der Verbrennungsgase beim Eintritt in die Gasturbine von beispielsweise 1000 bis 1300 °C angestrebt. Die obere Grenze für diese Temperatur ergibt sich allerdings aus der thermischen Belastbarkeit der Turbinenschaufeln.

Aus der EP 768 448 ist die Anordnung einer luftgekühlten Leitschaufel in einer Gasturbine bekannt. Die Kühlluft wird durch ein Kühlluftrohr der Leitschaufel zugeführt. Ein im Kühl luftrohr angeordnetes Ventil kann dabei den Durchfluss und den Druck der Kühlluft für die Leitschaufel in Abhängigkeit von der Betriebslast einstellen. Dabei ist das Ventil zwischen einer offenen Position für Spitzenlastbetrieb und einer die Kühlluftzufuhr reduzierenden Position für Teillastbetrieb einstellbar.

Bei einer Gasturbine kann eine Steigerung der Temperatur der Verbrennungsgase dann zugelassen werden, wenn die Turbinenschaufeln so gekühlt werden, daß Schäden der Gasturbine zuverlässig verhindert sind. Zur Kühlung der Turbinenschaufeln werden üblicherweise am Luftverdichter Teilluftströme entnommen und verschiedenen Turbinenstufen als Kühlluft zugeführt. Dadurch verringert sich jedoch die für die Verbrennung in der Gasturbine bereitstellbare Luftmenge.

Der Erfindung liegt daher die Aufgabe zugrunde, eine Gasturbine anzugeben, bei der mit geringem technischen Aufwand die zur Kühlung einer Turbinenstufe bereitgestellte Kühlluftmenge gering gehalten ist. Zudem soll ein Verfahren zur Kühlung einer Turbinenstufe der Gasturbine angegeben werden.

Die auf die Gasturbine gerichtete Aufgabe wird erfindungsgemäß durch die Merkmale des Anspruchs 1 gelöst.
Die Erfindung geht von der Überlegung aus, daß der Druckaufbau der verdichteten Luft in einem Luftverdichter der Gasturbinenanlage nicht linear, sondern stufenweise erfolgt. Der stufenweise Druckaufbau hängt dabei von verschiedenen Parametern, wie Umgebungstemperatur, Vorleitgitterstellung und Druckverhältnis, ab. Mit diesen Parametern variiert beim Betrieb des Luftverdichters auch der an bestimmten Stellen des Luftverdichters herrschende Druck. Diese Schwankungen der Druckwerte an bestimmten Stellen des Luftverdichters sind Druckwerte an bestimmten Stellen des Luftverdichters sind nicht mehr so stark, liegen aber auch dann noch vor, wenn man die jeweiligen Druckwerte mit dem Druckwert am Luftverdichterende normiert. Normierung bedeutet hierbei, einen Quotienten aus dem jeweiligen Druckwert an einer bestimmten Stelle des Luftverdichters und dem Druckwert am Luftverdichterende zu bilden. Deswegen ist eine Auslegung des Kühlluftsystems für einen besonders geringen normierten Entnahmedruck an einer bestimmten Stelle des Luftverdichters erforderlich. Dies führt bei wachsendem normierten Entnahmedruck zwangsläufig zu einem Anstieg der Kühlluftmenge über das erforderliche Maß hinaus. Dieser Effekt wirkt sich stark negativ auf den Wirkungsgrad der Gasturbine aus, da die kalte Kühlluft die Temperatur des sich arbeitsleistend in der Gasturbine entspannenden Arbeitsmediums verringert.

Im Hinblick auf verschiedene Betriebszustände der Gasturbine erweist sich der Einsatz einer Regeleinheit als vorteilhaft, über die die Mittel der Kühlluftzuführung regelbar sind. Diese mißt beispielsweise über eine Meßleitung den Druck an dem Kühlluftauslaß und steuert dann entsprechend des vorgegebenen Drucks das Drosselelement an, wobei die Menge an zugeführter Kühlluft einstellbar ist.

Ein Überschuß an Kühlluft ist vermeidbar, wenn Schwankungen im Druck der Kühlluft besonders zuverlässig vermieden sind. Dabei sollte im Hinblick auf verschiedene Betriebszustände der Gasturbine der Druck der Kühlluft einstellbar sein und der hierfür erforderliche technische Aufwand besonders gering ausfallen. Dies wird durch die Erfindung gelöst, indem die Kühlluft der Turbinenstufe über die Leitschaufel zuführbar ist, wobei ein vorgebbarer Druck der Kühlluft am Kühlluftauslaß einstellbar ist.

Vorteilhafterweise ist einer Laufschaufel der Turbinenstufe Kühlluft über die Leitschaufel zuführbar. Aufgrund der hohen Fliehkraftbelastung der Laufschaufel ist nämlich ein Einbau von Mitteln zum Einstellen eines vorgebbaren Druck-Sollwerts der Kühlluft an der Laufschaufel mit technischen Schwierigkeiten verbunden. Diese Schwierigkeiten treten nicht auf, wenn über die Leitschaufel Kühlluft mit einem bestimmten Druck der Laufschaufel zugeführt wird.

Die Kühlluftzuführung weist vorteilhafterweise als Mittel ein Drosselelement, insbesondere eine Drosselklappe, auf. Mit dem Drosselelement, insbesondere der Drosselklappe, läßt sich nämlich konstruktiv besonders einfach bei bekannten Strömungsverhältnissen der Kühlluft ein vorgebbarer Druck der Kühlluft an dem Kühlluftauslaß einstellen.

Vorteilhafterweise sind Mittel vorgesehen, über die die Strömungsgeschwindigkeit und Strömungsrichtung der Kühlluft stromab der Leitschaufel einstellbar sind. Auf diese Weise können die Strömungsgeschwindigkeit und die Strömungsrichtung der Kühlluft beim Eintritt in die Laufschaufel und/oder in die Welle so ausgelegt sein, daß die Kühlluft die lokale Umfangsgeschwindigkeit der Laufschaufel und/oder der Welle besitzt, dem Betrage und der Richtung nach. Damit sind Verluste von Kühlluft und die erforderliche Menge an Kühlluft besonders gering gehalten. Außerdem führt eine Beschleunigung der Kühlluft zu einer Abkühlung derselben, so daß eine ausreichende Kühlung der Laufschaufel besonders zuverlässig gewährleistet ist. In einer weiteren vorteilhaften Ausgestaltung der Erfindung umfassen dabei diese Mittel eine Dralldüse.

Die Turbinenstufe, in die die Kühlluftzuführung mit dem Kühlluftauslaß mündet, ist vorteilhafterweise eine Turbinenstufe, die zwischen einer ersten Turbinenstufe (Hochdruckstufe) und einer Endstufe (Niederdruckstufe) angeordnet ist. Solche Turbinenstufen werden nämlich üblicherweise ausgehend von einer Entnahmestelle des Luftverdichters der Gasturbinenanlage durch die Welle mit Kühlluft versorgt. Die Versorgung einer mittleren Turbinenstufe mit Kühlluft über die Leitschaufel ermöglicht den Verzicht auf eine mit hohen Druckverlusten der Kühlluft verbundene separate Zuführung der Kühlluft über die Welle zur Laufschaufel der mittleren Turbinenstufe.

Bezüglich des Verfahrens zur Kühlung einer Turbinenstufe der Gasturbine mittels Kühlluft wird die genannte Aufgabe erfindungsgemäßdurch die Merkmale des Anspruchs 7 gelöst. Dabei erweist es sich als vorteilhaft, wenn die Strömungsgeschwindigkeit und Strömungsrichtung der Kühlluft ausgangsseitig nach (stromab) der Leitschaufel eingestellt werden.

Die mit der Erfindung erzielten Vorteile bestehen insbesondere darin, daß durch die Einstellung des vorgebbaren Drucks am Kühlluftauslaß Schwankungen im Druck der Kühlluft zuverlässig verhindert sind und die erforderliche Menge an Kühlluft besonders gering ist. Dadurch kann das Kühlluftsystem unabhängig vom Entnahmedruck für die Erfordernisse der Gasturbine ausgelegt werden. Darüber hinaus sind die Druckverluste der Kühlluft besonders gering gehalten, da diese über einen besonders kurzen Weg von der Leitschaufel in die Laufschaufel gelangt. Außerdem wird der Wirkungsgrad der Gasturbine durch die geringe erforderliche Menge an Kühlluft gesteigert. Wird das Kühlsystem dabei als geschlossenes System ausgeführt, d.h. wenn die Kühlluft nicht mit dem Arbeitsmedium der Gasturbine vermischt wird, so kann dadurch eine weitere Steigerung des Wirkungsgrads der Gasturbine erreicht werden.

Ein Ausführungsbeispiel der Erfindung wird anhand der Zeichnung näher erläutert. Darin zeigen:
- FIG 1: schematisch eine Gasturbinenanlage mit einer Gasturbine und
- FIG 2: schematisch einen Längsschnitt durch eine Turbinenstufe der Gasturbine gemäß Figur 1.

Gleiche Teile sind in allen Figuren mit denselben Bezugszeichen versehen.

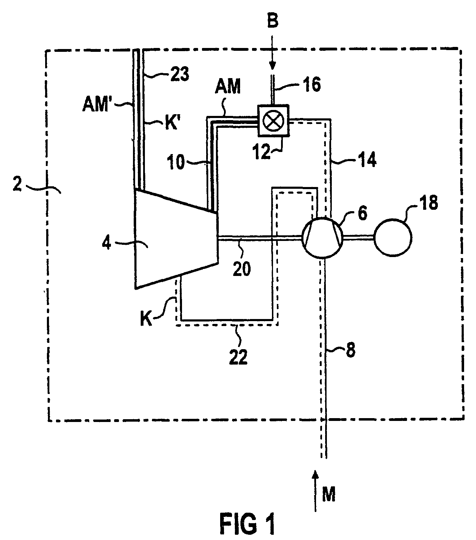

Die in Figur 1 schematisch dargestellte Gasturbinenanlage 2 umfaßt eine Gasturbine 4 mit angekoppeltem Luftverdichter 6. Der Luftverdichter 6 ist eingangsseitig an eine Ansaugluftleitung 8 angeschlossen. Der Gasturbine 4 ist zum Zuführen von Arbeitsmedium AM über eine Leitung 10 eine Brennkammer 12 vorgeschaltet, die an eine Frischluftleitung 14 des Luftverdichters 6 angeschlossen ist. In die Brennkammer 12 der Gasturbine 4 mündet eine für die Zuleitung von Brennstoff B vorgesehene Brennstoffleitung 16. Die Gasturbine 4 und der Luftverdichter 6 sowie ein Generator 18 weisen eine gemeinsame Welle 20 auf. Zum Zuführen von Kühlluft K für die Gasturbine 4 ist der Luftverdichter 6 mit der Gasturbine 4 über eine Anzahl von Kühlluftleitungen 22 verbunden, von denen hier nur eine dargestellt ist. Dabei können die Kühlluftleitungen 22 von verschiedenen Stellen und damit Druckniveaus des Luftverdichters 6 ausgehen. Ausgangsseitig ist die Gasturbine 4 an eine Abgasleitung 23 angeschlossen, über die entspanntes Arbeitsmedium AM' und/oder erwärmte Kühlluft K' die Gasturbine verlassen.

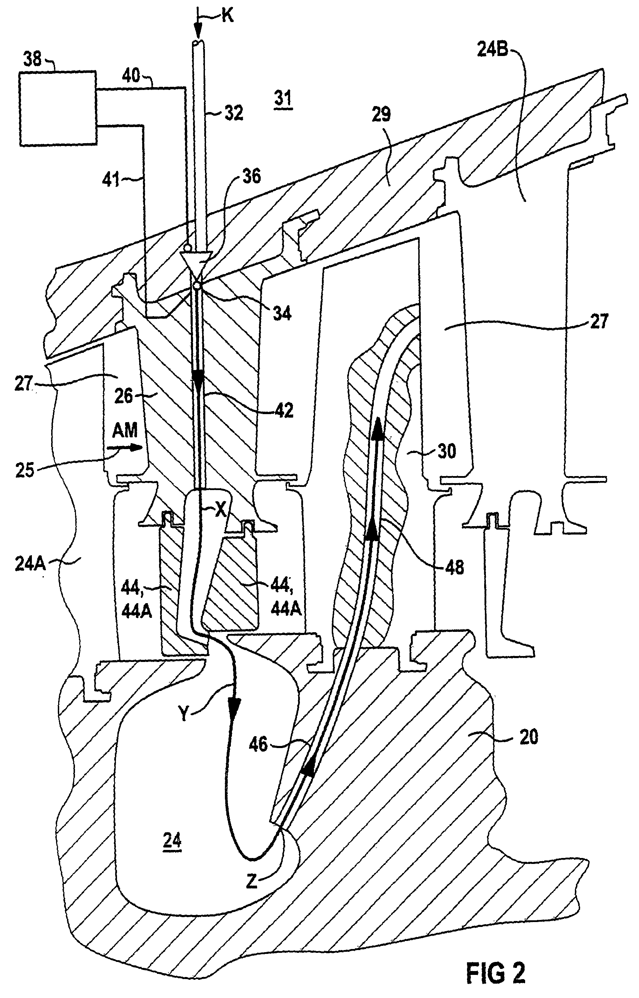

In Figur 2 ist eine Turbinenstufe 24 der Gasturbine 4 im Längsschnitt dargestellt. Diese befindet sich in Bezug auf die Strömungsrichtung 25 des Arbeitsmediums AM der Gasturbine 4 hinter einer ersten Turbinenstufe 24A und vor der zweiten Turbinenstufe 24B der Gasturbine 4 im Heizgaskanal 27. Die mittlere Turbinenstufe 24 der Gasturbine 4 umfaßt eine Leitschaufel 26, die am Gehäuse 29 der Gasturbine 4 angeordnet ist, und eine an der Welle 20 angeordnete Laufschaufel 30. Das Gehäuse 29 der Gasturbine 4 umschließt den Heizgaskanal 27, was in der Zeichnung nicht näher dargestellt ist. Das Arbeitsmedium AM tritt annähernd horizontal mit der Strömungsrichtung 25 durch das Gehäuse 29 der Gasturbine 4, wobei es über Leitschaufeln 26 und Laufschaufeln 30 der einzelnen Turbinenstufen 24 geführt wird.

Zur Kühlung der mittleren Turbinenstufe 24 mit Kühlluft K istein Kühlluftsystem 31 vorgesehen. Das Kühlluftsystem 31 weist eine durch das Gehäuse 29 der Gasturbine 4 geführte Zuführung 32 für Kühlluft K auf, die mit einer oder mehreren der Kühlluftleitungen 22 in nicht näher dargestellter Weise verbunden ist. Über diese Zuführung 32 für Kühlluft K gelangt aus dem Luftverdichter 6 der Gasturbinenanlage 2 Kühlluft K über einen Kühlluftauslaß 34 zur Leitschaufel 26. In der Zuführung 32 ist als Mittel 36 zur Einstellung eines vorgebbaren Drucks der Kühlluft K an dem Kühlluftauslaß 34 ein als Drosselklappe ausgebildetes Drosselelement 36 angeordnet. Weiter umfaßt das Kühlluftsystem 31 eine Regeleinheit 38, die über eine Anschlußleitung 40 mit dem Drosselelement 36 und über eine Meßleitung 41 mit dem Kühlluftauslaß 34 verbunden ist.

Der durch die Leitschaufel 36 hindurch geführte Kühlluftkanal 42 mündet ausgangsseitig in eine Dralldüse 44A. Die Dralldüse 44A wird durch zwei Abdichtungen gebildet, die in nicht näher dargestellter Weise an der Welle 20 befestigt sind. Die Abdichtungen schließen den Spalt zwischen der Leitschaufel 26 und der Welle 20. Die Dralldüse 44A ist ein Mittel 44, über das die Strömungsgeschwindigkeit und die Strömungsrichtung der Kühlluft K ausgangsseitig nach der Leitschaufel 26 eingestellt werden. Die die Dralldüse verlassende Kühlluft K strömt in den in der Welle 20 angeordneten Kanal 46. Hierfür ist keine zusätzliche Führung erforderlich, da der Druck der die Dralldüse 44A verlassenden Kühlluft K größer ist als der in dem Kanal 46 herrschende Druck. Beispielsweise weist die Kühlluft K in der Dralldüse 44A am Punkt X einen Druck von 9,97 bar und eine Temperatur von 410 °C auf, am Punkt Y ausgangsseitig nach der Dralldüse 44A einen Druck von 8,88 bar und eine Temperatur von 390 °C und am Punkt Z im Eingangsbereich des Kanals 46 einen Druck von 8,35 bar und eine Temperatur von 388 °C.

Über den durch das Innere der Welle 20 geführten Kanal 46 gelangt die Kühlluft K in einen im Inneren der Laufschaufel 30 geführten Kanal 48. Alternativ kann die Kühlluft K auch direkt der Laufschaufel 30 zugeführt werden. Der Kanal 48 mündet in den Heizgaskanal 27, wo eine Vermischung der Kühlluft K mit dem Arbeitsmedium AM der Gasturbine 4 erfolgt. Durch diese Beimischung von kalter Kühlluft zu im Vergleich dazu heißem Arbeitsmedium AM erfolgt eine Abkühlung des Arbeitsmediums AM, wodurch der Wirkungsgrad der Gasturbine geringer wird.

Das Kühlluftsystem 31 ist als offenes System ausgeführt. Bei einem offenen System wird die Kühlluft K mit dem Arbeitsmedium AM der Gasturbine 4 vermischt. Alternativ kann jedoch auch ein geschlossenes System vorgesehen sein. Bei einem geschlossenen System gelangt die Kühlluft K nicht in das Arbeitsmedium AM der Gasturbine 4, wodurch eine Steigerung des Wirkungsgrads der Gasturbine herbeigeführt werden kann.

Damit die zur Kühlung der Gasturbine 4 erforderliche Menge an Kühlluft K besonders gering ist, wird diese mit einem vorgebbaren Druck über die Leitschaufel 26 der auf der Welle 20 angeordneten Laufschaufel 30 zugeführt. Hierfür wird Kühllüft K dem Luftverdichter 6 der Gasturbinenanlage 2 entnommen und der mittleren Turbinenstufe 24 der Gasturbine 4 über eine der Kühlluftleitungen 22 zugeführt. Über die Zuführung 32 gelangt die Kühlluft K zu dem der Zuführung 32 nachgeschalteten Kühlluftauslaß 34. Am Kühlluftauslaß 34 ist über die Regeleinheit 38 ein bestimmter Druck der Kühlluft K einstellbar. Hierfür mißt die Regeleinheit 38 über die Meßleitung 41 mit Hilfe eines nicht näher dargestellten Sensors den Druck der Kühlluft K ausgangsseitig nach dem Drosselelement 36 am Kühlluftauslaß 34. Über die Anschlußleitung 40 steuert die Regeleinheit 38 die Öffnung des Drosselelements 36 derart, daß am Kühlluftauslaß 34 der von der Regeleinheit 38 vorgegebene Druck herrscht. Vom Kühlluftauslaß 34 aus gelangt die Kühlluft K über den in der Leitschaufel 26 vorgesehenen Kanal 42 zu der ausgangsseitig nach der Leitschaufel 26 angeordneten - Dralldüse 44A. Diese beschleunigt die Kühlluft K in Umfangsrichtung der Welle 20 derart, daß die Kühlluft K beim Eintritt in die Welle 20 deren lokale Umfangsgeschwindigkeit in Betrag und Richtung besitzt. Durch diese Beschleunigung wird die Temperatur der Kühlluft K bei ihrem Eintritt in die Welle 20 abgesenkt. Über den im Inneren der Welle 20 vorgesehenen Kanal 46 gelangt die Kühlluft K dann in die Laufschaufel 30 und schließlich in den Heizgaskanal 27.

Die Führung der Kühlluft K über die Leitschaufel 26 zur Laufschaufel 30 der Gasturbine 4 erzeugt in der Turbinenstufe 24 besonders geringe Druckverluste in der Kühlluft K, da der Strömungspfad der Kühlluft K in der Turbinenstufe 24 besonders kurz ist. Eine Abkühlung der Kühlluft K bewirkt hierbei die Dralldüse 44A. Durch die Einstellung eines vorgebbaren Drucks am Kühllufteinlaß 34 der Leitschaufel 26 wird die Menge an Kühlluft K auf ein solches Maß begrenzt, wie zur Erfüllung der Kühlaufgabe erforderlich ist. Dadurch weist die Gasturbinenanlage 2 einen besonders geringen Verbrauch an Kühlluft K auf, wodurch sich ein relativ hoher Wirkungsgrad der Gasturbine 4 ergibt.

## Patentansprüche

1. Gasturbine (4) mit einer Turbinenstufe (24), umfassend eine Leitschaufel (26), und mit einer Zuführung (32) für Kühlluft (K), die einen Kühlluftauslaß (34) aufweist, wobei die Turbinenstufe (24) durch die Kühlluft (K) kühlbar ist, welche über den Kühlluftauslaß (34) der Leitschaufel (26) zuführbar ist, wobei die Zuführung (32) erste Mittel (36) aufweist, über die ein vorgebbarer Druck der Kühlluft (K) an dem Kühlluftauslaß (34) einstellbar ist,
**dadurch gekennzeichnet,**
**dass** ein am Kühlluftauslaß (34) angeordneter, den Druck der Kühlluft (K) erfassender und mit einer Regeleinheit (38) kommunizierender Sensor vorgesehen ist, und
**dass** mittels der Regeleinheit (38) über die ersten Mittel (36) der Druck der Kühlluft (K) an dem Kühlluftauslaß (34) einstellbar ist.

2. Gasturbine (4) nach Anspruch 1,
bei der die Turbinenstufe (24) eine Laufschaufel (30) umfaßt, der Kühlluft (K) über die Leitschaufel (26) zuführbar ist.

3. Gasturbine (4) nach Anspruch 1 oder 2,
bei der die Zuführung (32) als erste Mittel (36) ein Drosselelement (36a), insbesondere eine Drosselklappe (36a), aufweist.

4. Gasturbine (4) nach einem der Ansprüche 1 bis 3,
mit zweiten Mitteln (44), über die die Strömungsgeschwindigkeit und Strömungsrichtung der Kühlluft (K) stromab der Leitschaufel (26) einstellbar sind.

5. Gasturbine (4) nach Anspruch 4,
bei der die zweiten Mittel (44) eine Dralldüse (44a) umfassen.

6. Gasturbine (4) nach einem der Ansprüche 1 bis 5,
mit einer Anzahl von Turbinenstufen (24, 24a, 24b), bei der die Turbinenstufe (24) eine mittlere Turbinenstufe ist, die nach einer ersten Turbinenstufe (24a) und vor einer letzten Turbinenstufe (24b) angeordnet ist.

7. Verfahren zur Kühlung einer Turbinenstufe einer Gasturbine mittels Kühlluft, bei dem einer Leitschaufel der Turbinenstufe Kühlluft über einen Kühlluftauslaß zugeführt wird, wobei ein vorgebbarer Druck der Kühlluft an dem Kühlluftauslaß eingestellt wird,
**dadurch gekennzeichnet,**
**dass** der Druck der Kühlluft am Kühlluftauslaß erfasst und über eine Regeleinheit geregelt wird.

8. Verfahren nach Anspruch 7,
bei dem die Turbinenschaufel eine Laufschaufel umfaßt, der Kühlluft über die Leitschaufel zugeführt wird.

9. Verfahren nach Anspruch 7 oder 8,
bei dem die Strömungsgeschwindigkeit und Strömungsrichtung der Kühlluft stromab der Leitschaufel eingestellt werden.

## Claims

1. Gas turbine (4) having a turbine stage (24), comprising a guide blade (26), and having a feed (32) for cooling air (K), the feed (32) having a cooling-air outlet (34), in which turbine the turbine stage (24) can be cooled by the cooling air (K), which can be fed via the cooling-air outlet (34) to the guide blade (26), the feed (32) having first means (36) via which a predeterminable pressure of the cooling air (K) can be set at the cooling-air outlet (34), **characterized in that** a sensor which is arranged at the cooling-air outlet (34), detects the pressure of the cooling air (K) and communicates with a control unit (38) is provided, and **in that** the pressure of the cooling air (K) can be set at the cooling air outlet (34) by means of the control unit (38) via the first means (36).

2. Gas turbine (4) according to Claim 1, in which the turbine stage (24) comprises a moving blade (30), to which cooling air (K) can be fed via the guide blade (26).

3. Gas turbine (4) according to Claim 1 or 2, in which the feed (32) has a throttle element (36a) as first means (36), in particular a throttle valve (36a).

4. Gas turbine (4) according to one of Claims 1 to 3, having second means (44) via which the flow velocity and the flow direction of the cooling air (K) can be set downstream of the guide blade (26).

5. Gas turbine (4) according to Claim 4, in which the second means (44) comprise a swirl nozzle (44a).

6. Gas turbine (4) according to one of Claims 1 to 5, having a number of turbine stages (24, 24a, 24b), in which the turbine stage (24) is an intermediate turbine stage which is arranged downstream of a first turbine stage (24a) and upstream of a last turbine stage (24b).

7. Method of cooling a turbine stage of a gas turbine by means of cooling air, in which cooling air is fed to a guide blade of the turbine stage via a cooling-air outlet, a predeterminable pressure of the cooling air being set at the cooling-air outlet, **characterized in that** the pressure of the cooling air is detected at the cooling-air outlet and controlled via a control unit.

8. Method according to Claim 7, in which the turbine stage comprises a moving blade, to which cooling air is fed via the guide blade.

9. Method according to Claim 7 or 8, in which the flow velocity and flow direction of the cooling air are set downstream of the guide blade.

## Revendications

1. Turbine (4) à gaz comprenant un étage (24) de turbine comportant une aube (26) directrice et une admission (32) d'air (K) de refroidissement qui comporte une sortie (34) pour de l'air de refroidissement, l'étage (24) de la turbine pouvant être refroidi par l'air (K) de refroidissement qui peut être apporté par la sortie (34) pour l'air de refroidissement à l'aube (26) directrice, l'admission (32) comprenant des premiers moyens (36) par lesquels une pression, pouvant être donnée à l'avance, de l'air (K) de refroidissement peut être établie à la sortie (34) de l'air de refroidissement,
**caractérisée**
**en ce qu'**il est prévu un capteur disposé à la sortie (34) pour l'air de refroidissement détectant la pression (K) de l'air de refroidissement et communiquant avec une unité (38) de réglage, et
**en ce que**, au moyen de l'unité (38) de réglage, la pression de l'air (K) de refroidissement peut être réglée à la sortie (34) pour l'air de refroidissement par les premiers moyens (36).

2. Turbine (4) à gaz suivant la revendication 1, dans laquelle l'étage (24) de turbine comprend une aube (30) mobile à laquelle de l'air (K) de refroidissement peut être apporté par l'aube (26) directrice.

3. Turbine (4) à gaz suivant la revendication 1 ou 2, dans laquelle l'admission (32) comporte comme premiers moyens (36) un élément (36a) d'étranglement, notamment un volet (36a) d'étranglement.

4. Turbine (4) à gaz suivant l'une des revendications 1 à 3, comprenant des deuxièmes moyens (44) par lesquels la vitesse du courant et la direction du courant d'air (K) de refroidissement peuvent être réglées en aval de l'aube (26) directrice.

5. Turbine (4) à gaz suivant la revendication 4, dans laquelle les deuxièmes moyens (44) comprennent une buse (44a) de mise en tourbillonnement.

6. Turbine (4) à gaz suivant l'une des revendications 1 à 5, comprenant un certain nombre d'étages (24, 24a, 24b) de turbine, dans laquelle l'étage (24) de turbine est un étage de turbine intermédiaire qui est disposé après un premier étage (24a) de turbine et avant un dernier étage (24b) de turbine.

7. Procédé de refroidissement d'un étage d'une turbine à gaz au moyen d'air de refroidissement dans lequel on apporte à une aube directrice de l'étage de la turbine de l'air de refroidissement par une sortie pour de l'air de refroidissement, une pression, pouvant être donnée à l'avance, de l'air de refroidissement étant réglée à la sortie pour l'air de refroidissement,
**caractérisé**
**en ce que** l'on détecte la pression de l'air de refroidissement à la sortie pour l'air de refroidissement et on la règle par une unité de réglage.

8. Procédé suivant la revendication 7, dans lequel l'aube de turbine comprend une aube mobile à laquelle de l'air de refroidissement est apporté par l'aube directrice.

9. Procédé suivant la revendication 7 ou 8, dans lequel on règle la vitesse du courant et la direction du courant de l'air de refroidissement en aval de l'aube directrice.
